(19) 

Europäisches Patentamt
European Patent Office
Office européen des brevets

(11) **EP 4 446 766 A1**

(12) **EUROPEAN PATENT APPLICATION**
published in accordance with Art. 153(4) EPC

(43) Date of publication:
**16.10.2024 Bulletin 2024/42**

(21) Application number: **22859526.0**

(22) Date of filing: **18.08.2022**

(51) International Patent Classification (IPC):
*G01S 5/02* (2010.01)    *G01C 21/20* (2006.01)
*G06N 7/00* (2023.01)    *G06N 5/04* (2023.01)

(52) Cooperative Patent Classification (CPC):
**H04B 17/318; G01C 21/20; G01S 5/02; G01S 5/0205; G01S 5/0244; G01S 5/0278; G06N 5/04; G06N 7/00**

(86) International application number:
**PCT/KR2022/012359**

(87) International publication number:
**WO 2023/106551 (15.06.2023 Gazette 2023/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2021 KR 20210174116**

(71) Applicant: **Vestellalab Inc.**
**Seoul 04147 (KR)**

(72) Inventors:
• **CHOI, Yung Ji**
**Seongnam-si, Gyeonggi-do 13597 (KR)**
• **LEE, Young Soo**
**Gunpo-si, Gyeonggi-do 15856 (KR)**
• **JUNG, Sangsu**
**Uiwang-si, Gyeonggi-do 16034 (KR)**
• **SINGH, Dhananjay**
**Yongin-si, Gyeonggi-do 17035 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **INDOOR POSITIONING METHOD, COMPUTER PROGRAM, AND SYSTEM**

(57) Embodiments of the present disclosure provide an indoor positioning method of measuring a location of a mobile terminal by using the mobile terminal and a plurality of positioning sensors communicating with the mobile terminal. The indoor positioning method includes selecting a period for obtaining sensor intensity about a relationship between the mobile terminal and the plurality of positioning sensors, obtaining a variable sets corresponding to a positioning sensor selected from among the plurality of positioning sensors about which the sensor intensity is obtained, for each unit period of the selected period, applying a probability inference method to the variable sets, and obtaining a final location of the mobile terminal based on the probability inference method, wherein the sensor intensity includes a signal strength received by the mobile terminal from the positioning sensor and a unique identification number of the positioning sensor.

FIG. 4

```
┌─ START ─┐
     │
┌──────────────────────────┐
│ SELECT PERIOD FOR OBTAINING │── S100
│   SENSOR INFORMATION        │
└──────────────────────────┘
     │
┌──────────────────────────┐
│ OBTAIN VARIABLE GROUP CORRESPONDING │── S200
│ TO SELECTED SIGNAL GENERATION DEVICE, │
│   FOR EACH SELECTED PERIOD           │
└──────────────────────────┘
     │
┌──────────────────────────┐
│ APPLY PROBABILITY INFERENCE │── S300
│   METHOD TO VARIABLE GROUP  │
└──────────────────────────┘
     │
┌──────────────────────────┐
│ OBTAIN FINAL LOCATION OF MOBILE TERMINAL │── S400
│ BASED ON PROBABILITY INFERENCE METHOD │
└──────────────────────────┘
     │
  ┌─ END ─┐
```

EP 4 446 766 A1

**Description**

Technical Field

The present disclosure relates to an indoor positioning method, computer program, and system.

Background Art

Recently, research and development on vehicle-to-everything (V2X) has been actively conducted. V2X refers to a communication method in which a vehicle exchanges or shares information such as a location of the vehicle, surrounding location information, and traffic conditions while communicating with all elements around the vehicle (e.g., road infrastructure, other vehicles, pedestrians, and networks) during driving. V2X based services may provide, for example, an autonomous driving service, a vehicle remote control service, and a large-capacity short-range service such as AR or VR.

In an autonomous vehicle, positioning technology for identifying a location of the vehicle is essential for reliable self-driving. In general, a global positioning system (GPS) signal may be used to identify a location outdoors. In an outdoor environment, the influence of structures or obstacles that interfere with signal transmission and reception is small and an error in signal transmission and reception is trivial. However, in an indoor space such as a parking lot, a GPS signal reception failure or error occurs due to constructions such as ceilings, walls, and pillars. In the case of a parking lot, the precision of GPS is not sufficient to track the movements along the road, and especially, in the case of an underground parking lot, a vehicle may not receive a GPS signal, which indicates the result of the positioning is no longer reliable. Moreover, for reliable self-driving and parking of an autonomous vehicle, indoor positioning technology that may accurately and rapidly measure a location of the autonomous vehicle that changes in real time is essential. If the result of positioning is represented in a certain "point", a moving object will not be tracked properly, and it is difficult to combine with other sensor intensity.

Disclosure

Technical Problem

Embodiments of the present disclosure provide an indoor positioning method, computer program, and system in which a location of a moving object may be precisely and accurately identified even in an indoor space.

Also, embodiments of the present disclosure provide an indoor positioning method, computer program, and system in which an estimated result value of a location of a moving object is output as a probability distribution to be easily processed according to a user's needs and easily combined with other sensor intensity, thereby improving the accuracy of estimating a location of the moving object.

Technical Solution

According to an embodiment of the present disclosure, an indoor positioning method of measuring a location of the Edge/end device by using the mobile terminal and a plurality of positioning sensors communicating with the mobile terminal includes selecting a period for obtaining sensor intensity about a relationship between the mobile terminal and the plurality of positioning sensors, obtaining a variable sets corresponding to a positioning sensor selected from among the plurality of positioning sensors about which the sensor intensity is obtained, for each unit period of the selected period, applying a probability inference method to the variable sets, and obtaining a final location of the mobile terminal based on the probability inference method, wherein the sensor intensity includes a signal strength received by the mobile terminal from the positioning sensor and a unique identification number of the positioning sensor.

The obtaining of the variable sets may include selecting a positioning sensor group included in a sensor intensity receivable range from among the plurality of positioning sensors for each unit period, wherein the positioning sensor group includes at least two positioning sensors, selecting an available positioning sensor pair for the selected positioning sensor group for each unit period, obtaining combination data of the positioning sensor pair for each unit period, and obtaining the variable sets based on the combination data.

The combination data may include at least one of a distance ratio between the mobile terminal and each of two positioning sensors of the positioning sensor pair, a first vector including an absolute coordinate value of each of the two positioning sensors of the positioning sensor pair, and a second vector including a relative coordinate value of another positioning sensor with respect to one positioning sensor from among the two positioning sensors of the positioning sensor pair.

The variable sets may include information about an Apollonius' sphere calculated based on a signal strength and a unique identification number of a corresponding positioning sensor pair, wherein the information includes the Apollonius' sphere including combination data for each unit period, and a plurality of intercepts of the Apollonius' sphere for each unit period.

When k positioning sensors are selected as the positioning sensor group (k is a natural number satisfying $2 \leq k \leq n$), the positioning sensor pairs as many as combinations $_kC_2$ may be obtained.

The applying of the probability inference method that is applying a Bayesian inference method to the combination data may include selecting at least two sample data from among a plurality of variable set, and calculating a probability distribution of a location of the mobile terminal having a normal distribution by multiplying each of the selected sample data by a corresponding filter function.

The calculating of the final location of the mobile terminal may include calculating a circular distribution including a representative value selected from among a median value or an average value of the probability distribution, and a standard deviation value distributed around the median value.

According to an embodiment of the present disclosure, a computer program is stored in a recording medium to execute the indoor positioning method according to the embodiments by using a computer.

According to an embodiment of the present disclosure, an indoor positioning system includes an indoor positioning server communicating with a mobile terminal and a plurality of positioning sensors, wherein the indoor positioning sensor is configured to select a period for obtaining sensor intensity about a relationship between the mobile terminal and the plurality of positioning sensors, obtain a variable sets corresponding to a positioning sensor selected from among the plurality of positioning sensors about which the sensor intensity is obtained, for each unit period of the selected period, apply a probability inference method to the variable sets, and obtain a final location of the mobile terminal based on the probability inference method, wherein the sensor intensity includes a signal strength received by the mobile terminal from the positioning sensor and a unique identification number of the positioning sensor.

The indoor positioning server may be further configured to, in the obtaining of the variable sets, select a positioning sensor group included in a sensor intensity receivable range from among the plurality of positioning sensors for each unit period, wherein the positioning sensor group includes at least two positioning sensors, select an available positioning sensor pair for the selected positioning sensor group for each unit period, obtain combination data of the positioning sensor pair for each unit period, and obtain the variable sets based on the combination data.

The combination data may include at least one of a distance ratio between the mobile terminal and each of two positioning sensors of the positioning sensor pair, a first vector including an absolute coordinate value of each of the two positioning sensors of the positioning sensor pair, and a second vector including a relative coordinate value of another positioning sensor with respect to one positioning sensor from among the two positioning sensors of the positioning sensor pair.

The variable sets may include information about an Apollonius' sphere calculated based on a signal strength and a unique identification number of a corresponding positioning sensor pair, wherein the information includes the Apollonius' sphere including combination data for unit period, and a plurality of intercepts of the Apollonius' sphere for each unit period.

When k positioning sensors are selected as the positioning sensor group (k is a natural number satisfying $2 \leq k \leq n$), the positioning sensor pairs as many as combinations $_kC_2$ may be obtained.

The indoor positioning server may be further configured to, in the applying of the probability inference method that is applying a Bayesian inference method to the combination data, select at least two sample data from among a plurality of variable set, and calculate a probability distribution of a location of the mobile terminal having a normal distribution by multiplying each of the selected sample data by a corresponding filter function.

The indoor positioning server may be further configured to, in the calculating of the final location of the mobile terminal, calculate a circular distribution including a representative value selected from among a median value or an average value of the probability distribution, and a standard deviation value distributed around the median value.

Advantageous Effects

According to an indoor positioning method, computer program, and system according to an embodiment of the present disclosure, a location of a moving object may be precisely and accurately identified even in an indoor space.

Also, because an estimated result value of a location of a moving object is output as a probability distribution to be easily processed according to a user's needs and easily combined with other sensor intensity is facilitated, the accuracy of estimating a location of the moving object may be improved.

Description of Drawings

FIG. 1 is a diagram illustrating a configuration of an indoor positioning system including an indoor positioning server, according to an embodiment of the present disclosure.

FIG. 2 is a block diagram schematically illustrating a configuration of an indoor positioning device, according to an embodiment of the present disclosure.

FIG. 3 is a block diagram illustrating in detail a configuration of an indoor positioning device, according to an embodiment of the present disclosure.

FIG. 4 is a flowchart for describing an indoor positioning method, according to an embodiment of the present disclosure.

FIG. 5 is a diagram for describing a method of obtaining combination data, according to an embodiment of the present disclosure.

FIG. 6 is a schematic diagram for describing an example of a method of calculating a variable sets obtained according to an indoor positioning method, according to an embodiment of the present disclosure.

FIG. 7 is a diagram illustrating an example of a variable sets obtained according to an indoor positioning method, according to an embodiment of the present disclosure.

FIG. 8 is a diagram illustrating another example of a variable sets obtained according to an indoor positioning method, according to an embodiment of the present disclosure.

FIG. 9 is a diagram for describing a probability inference method applied to an indoor positioning method, according to an embodiment of the present disclosure.

FIG. 10 is a schematic view for describing a method of calculating a final location of a mobile terminal at one time point according to an indoor positioning method, according to an embodiment of the present disclosure.

FIG. 11 is a schematic view for describing a method of calculating a final location of a mobile terminal at another time point according to an indoor positioning method, according to an embodiment of the present disclosure.

Mode for Invention

As the present disclosure allows for various changes and numerous embodiments, certain embodiments will be illustrated in the drawings and described in the detailed description. Effects and features of the present disclosure, and methods for achieving them will be clarified with reference to embodiments described below in detail with reference to the drawings. However, the present disclosure is not limited to the following embodiments and may be embodied in various forms.

Hereinafter, embodiments will be described in detail with reference to the accompanying drawings, wherein the same or corresponding elements are denoted by the same reference numerals throughout and a repeated description thereof is omitted.

Although the terms "first," "second," etc. may be used to describe various elements, these elements should not be limited by these terms. These terms are only used to distinguish one element from another. The singular forms "a," "an," and "the" are intended to include the plural forms as well, unless the context clearly indicates otherwise. Also, it will be further understood that the terms "comprises" or "comprising" used herein specify the presence of stated features or components, but do not preclude the presence or addition of one or more other features or components.

Sizes of components in the drawings may be exaggerated or contracted for convenience of explanation. For example, because sizes and thicknesses of elements in the drawings are arbitrarily illustrated for convenience of explanation, the present disclosure is not limited thereto.

It will be further understood that, when a region, component, unit, block, or module is referred to as being "on" another region, component, unit, block, or module, it may be directly on the other region, component, unit, block, or module or may be indirectly on the other region, component, unit, block, or module with intervening regions, components, units, blocks, or modules therebetween. It will be further understood that, when a region, component, unit, block, or module is referred to as being connected to another region, component, unit, block, or module, it may be directly connected to the other region, component, unit, block, or module or may be indirectly connected to the other region, component, unit, block, or module with intervening regions, components, units, blocks, or modules therebetween.

In the specification, the term such as "unit", "module", "device", "terminal", "server", or "system" may be interpreted to refer to a combination of hardware and software driven by the hardware. For example, the hardware may be a data processing device including a central processing unit (CPU) or another processor. Also, the software that is driven by the hardware may be a running process, an object, an executable file, a thread of execution, or a program.

Hereinafter, an "app" may refer to an "application".

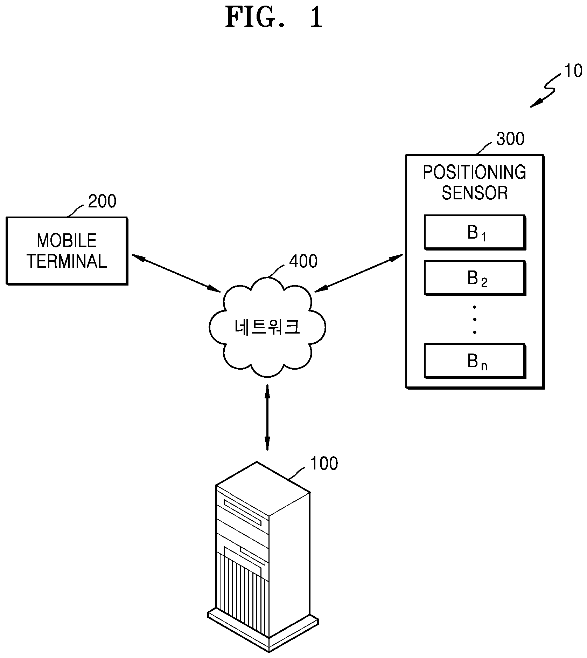

FIG. 1 is a diagram illustrating a configuration of an indoor positioning system 10 including an indoor positioning server 100, according to an embodiment of the present disclosure. The indoor positioning server 100 of the present disclosure may communicate with a mobile terminal 200 and a positioning sensor 300 through a network 400, and may measure a real-time location of the mobile terminal 200. Although a positioning method or system of the present disclosure is referred to as 'indoor positioning method or system', according to embodiments, the positioning method or system may not be limited to indoor positioning but may be applied to various outdoor spaces.

Although the indoor positioning server 100 for identifying a location of the mobile terminal 200 is illustrated as a block separate from the mobile terminal 200, according to embodiments, the indoor positioning server 100 may be provided as an internal processor of the mobile terminal 200 to measure a real-time location of the mobile terminal 200. The indoor positioning server 100 may be, but is not limited to, a cloud server.

The mobile terminal 200 is a device corresponding to any of various moving objects, and an example of the various moving objects may be a vehicle. The mobile terminal 200 may include a wireless communication module, for example, a Bluetooth module. For example, the mobile terminal 200 may be a mobile phone or a tablet PC carried by the owner of the vehicle, or an electronic device connected to or installed in the vehicle. As the mobile terminal 200 moves in a specific space, a location of the mobile terminal 2100 may change in real time. For example, the specific space may be any of various indoor or outdoor spaces having obstacles to receiving GPS signals such as an indoor/underground parking lot, a tunnel, an underground road, an underground shopping mall, or a building.

The positioning sensor 300 may identify a location of the mobile terminal 200 by transmitting an identifiable wireless signal to the mobile terminal 200 through a wireless network. The positioning sensor 300 of the present disclosure may include a plurality of positioning sensors $B_1$, $B_2$, ..., and $B_n$. A unique identification number for identifying each of the plurality of positioning sensors 300 may be assigned to each of the plurality of positioning sensors 300. The unique identification number may include identifier (ID) information, and a coordinate value of the positioning sensor 300 in a selected arbitrary coordinate system (e.g., a real-life coordinate system such as a relative coordinate system or an absolute coordinate system).

The positioning sensor 300 may be for example, a Bluetooth low energy (BLE) beacon, and in this case, may transmit a beacon signal to the mobile terminal 200. In this case, the beacon signal may include a beacon ID as a unique identification number of each beacon. The beacon ID may include at least one of a universally unique identifier (UUID), a major ID, a minor ID, and a received signal strength indication (RSSI). In an ID configuration, the major ID and/or the minor ID may include three digits, a unique number may be assigned for each floor to hundreds place, and a unique number may be assigned for each beacon to tens place or ones place. The RSSI corresponds to a strength of the beacon signal.

The mobile terminal 200 and each of the plurality of positioning sensors $B_1$, $B_2$, ..., and $B_n$ may transmit and receive data to and from each other while communicating through the network 400.

The network 400 may mediate data transmission and reception between the indoor positioning server 100 and other elements. A communication method between the mobile terminal 200 of the indoor positioning server 100, the positioning sensor 300, and/or other elements (not shown) is not limited, and the network 400 may include a wired and/or wireless communication network. Examples of the network 400 may include, but are not limited to, a wired network such as a local area network (LAN), a wide area network (WAN), a metropolitan area network (MAN), or an integrated service digital network (ISDN), and a wireless network such as a wireless LAN, code-division multiple access (CDMA), Bluetooth, or satellite communication.

A network environment in which the indoor positioning server 100 of the present disclosure operates may further include other elements (not shown) required to identify a location of the mobile terminal 200.

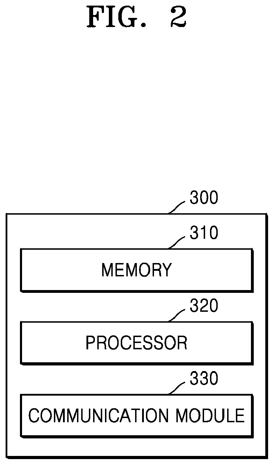

FIG. 2 is a block diagram schematically illustrating a configuration of the indoor positioning server 100, according to an embodiment of the present disclosure. The indoor positioning server 100 may include a communication module 110, a processor 120, and a memory 130.

The communication module 110 may communicate with various types of external devices or servers according to various communication methods. The communication module 110 may be connected to a communication module of another device or server through the network 400 and may transmit and receive data to and from the communication module.

The processor 120 may perform an operation of generally controlling the indoor positioning server 100 including the memory by using various programs stored in the memory. The processor 120 may include a processing device such as, but not limited to, a microprocessor, a central processing unit (CPU), a processor core, a multiprocessor, an application-specific integrated circuit (ASIC), or a field programmable gate array (FPGA). Operations performed by the indoor positioning server 100 may be performed by the processor 120 during communication with a communication module of another element.

The processor 120 may communicate with the mobile terminal 200 and the plurality of positioning sensors 300. The processor 120 may select a period (acquisition period) for obtaining sensor intensity about a relationship between the mobile terminal 200 and the positioning sensor 300. The sensor intensity may include a signal strength received by the mobile terminal 200 from the positioning sensor 300, and a unique identification number of the positioning sensor 300. Next, the processor 120 may obtain a variable sets corresponding to a positioning sensor selected from among the plurality of positioning sensors for each unit period of the selected acquisition period. Next, the processor 120 may apply a probability inference method to the variable sets, and may obtain a final location of the mobile terminal 200 based on the probability inference method. For example, when the selected period is 1 second (sec), the processor 120 may obtain a plurality of sensor intensity every 1 second that is a unit period, and may select at least two samples for the variable sets every 1 second and apply a probability inference method, to precisely measure an indoor location of the mobile terminal 200.

A detailed operation of the processor 120 will be described below in more detail with reference to a related drawing.

The memory 130 may temporarily or permanently store data processed by the indoor positioning server 100. The memory 130 may include a random-access memory (RAM), a read-only memory (ROM), or a permanent mass storage device such as a disk drive, but the present disclosure is not limited thereto.

The indoor positioning server 100 may further include a storage medium (not shown) that stores various data for an overall operation such as a program for processing or control of the processor 120. The storage medium may store a number of application programs or applications running on the indoor positioning server 100, data for the operation of the user terminal 100, and instructions. At least some of the application programs may be downloaded from an external server through wireless communication. Also, at least some of the application programs may be provided in the indoor positioning server 100 from the release for a basic function of the indoor positioning server 100. The application programs may be stored in the storage medium, and may be driven by the processor 120 to perform an operation (or a function) of the indoor positioning server 100.

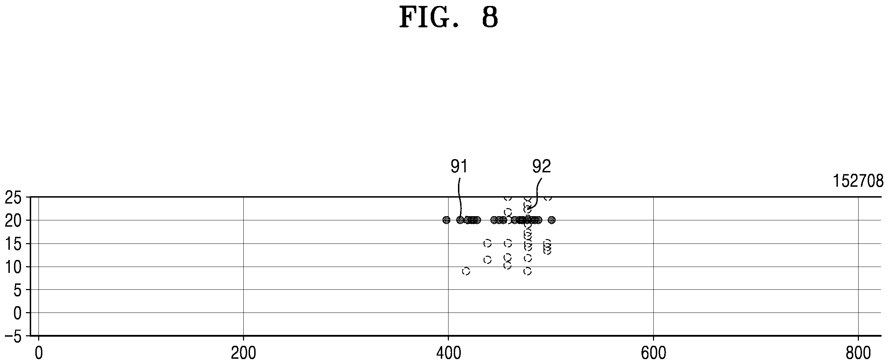

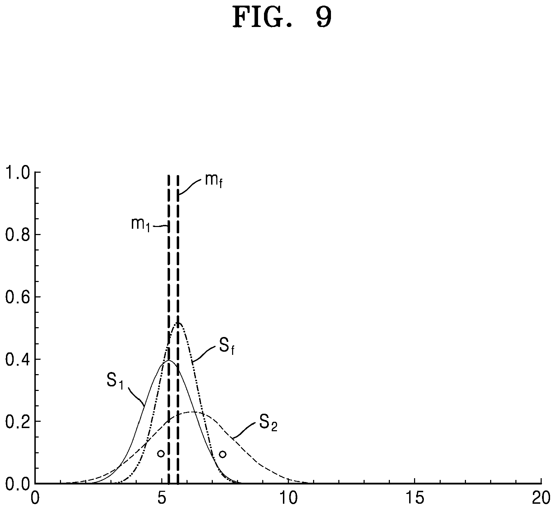

Also, although not shown, the indoor positioning server 100 (or the mobile terminal 200) may further include a display and/or an input/output interface other than the display. The display may display data input/output through the indoor positioning server 100. The display may display positioning data processed and output by an indoor positioning method according to an embodiment of the present disclosure in an output method according to an operation of the processor 120. For example, FIGS. 8 and 9 described below are views illustrating a screen output through the display (not shown).

Also, elements of the indoor positioning server 100 are not intended to refer to separate devices that are physically distinct from each other. That is, the communication module 110, the processor 120, and the memory 130 of FIG. 2 are just functionally distinguished according to an operation performed by the indoor positioning server 100, and do not have to be independently distinguished from each other. According to embodiments, the communication module 110, the processor 120, and the memory 130 may be implemented as separate devices that are physically distinct from each other. Also, although not shown, the indoor positioning sever 100 may further include another element required to implement the present disclosure.

Although the indoor positioning server 100 has been described in the above, the mobile terminal 200 and the positioning sensor 300 of FIG. 1 may also each include a communication module, a processor, and a memory, like the indoor positioning server 100.

A detailed configuration of the processor 120 and an operation of the indoor positioning server 100 will be described together.

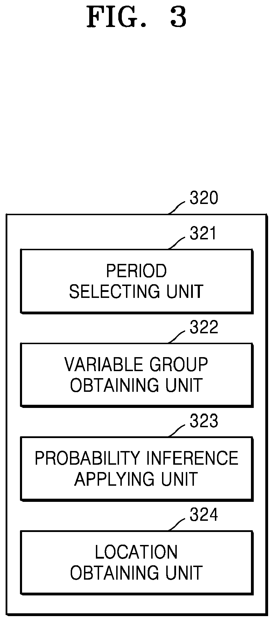

FIG. 3 is a block diagram illustrating in detail a configuration of the processor 120 that is an element of the indoor positioning server 100, according to an embodiment of the present disclosure. The processor 120 may include a period selecting unit 121, a variable sets obtaining unit 122, a probability inference applying unit 123, and a location obtaining unit 124.

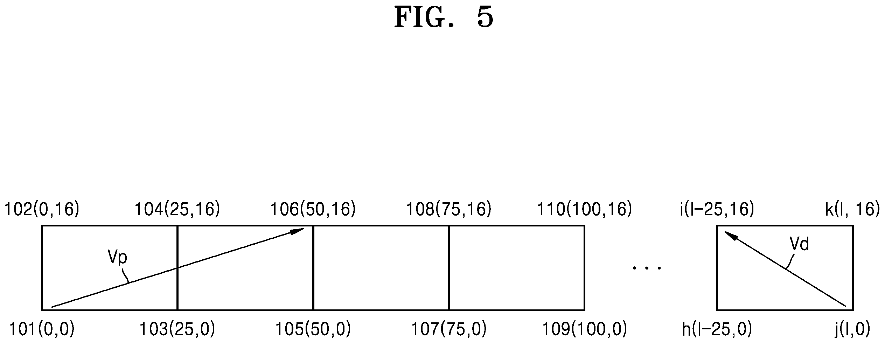

The period selecting unit 121 may select a period for obtaining sensor intensity about a relationship between the mobile terminal 200 and the positioning sensor 300. In this case, the sensor intensity may include a signal strength received by the mobile terminal 200 from the positioning sensor 300, and a unique identification number of the positioning sensor 300 as described above. An operation of the period selecting unit 121 will be described in more detail with reference to FIG. 5.

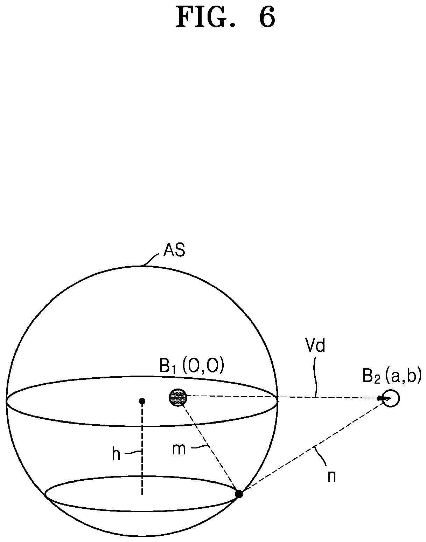

The variable sets obtaining unit 122 may obtain a variable sets, that is, sample data (sample) corresponding to a positioning sensor selected from among the plurality of positioning sensors 300 about which the sensor intensity is obtained, for each unit period of the selected period. An operation of the variable sets obtaining unit 122 will be described in more detail with reference to FIGS. 6 to 8.

The probability inference applying unit 123 may apply a probability inference method to the variable sets. An operation of the probability inference applying unit 123 will be described in detail with reference to FIG. 9.

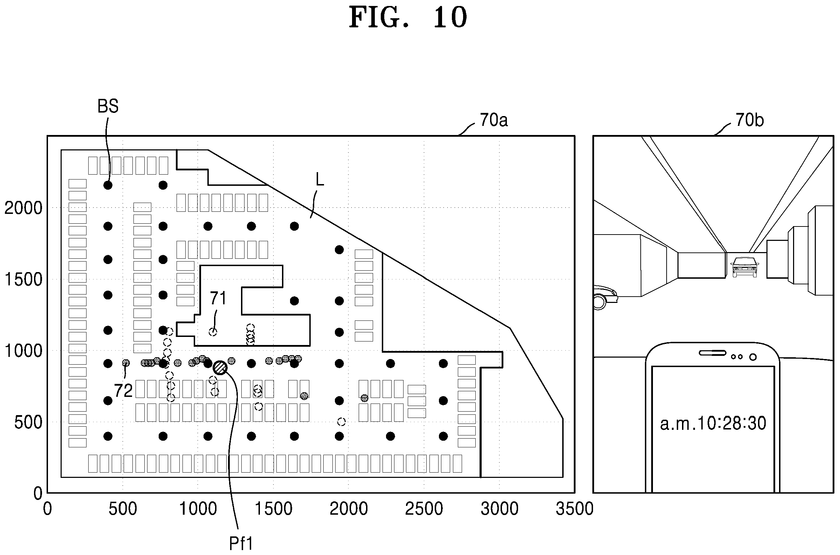

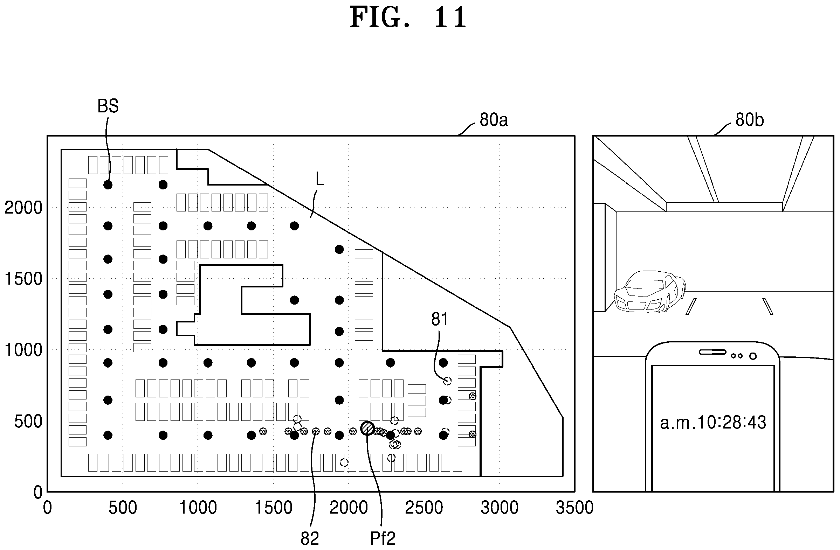

The location obtaining unit 124 may obtain a final location of the mobile terminal 200 based on the probability inference method. An output result by an operation of the location obtaining unit 124 will be described in more detail with reference to FIGS. 10 and 11.

Elements illustrated in FIG. 3 are functionally distinguished according to an operation performed by the processor 120, and do not have to be independently distinguished from each other. According to embodiments, the elements illustrated in FIG. 3 may be implemented as separate devices that are physically distinct from each other.

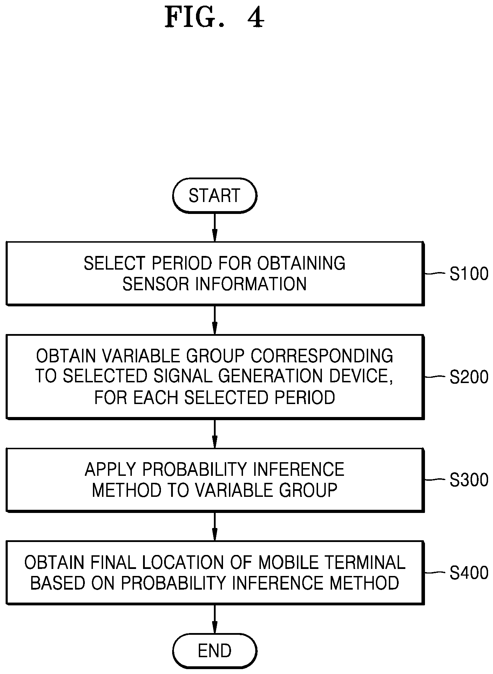

FIG. 4 is a flowchart for describing an indoor positioning method, according to an embodiment of the present disclosure. Methods described below may be performed by the processor 120 of the indoor positioning server 100.

In operation S100, a period (hereinafter, simply referred to as 'acquisition period') for obtaining sensor intensity about a relationship between the mobile terminal 200 and the positioning sensor 300 is selected. That is, when the acquisition period is selected as 't', the sensor intensity may be obtained at a time point that is a multiple (t, 2t, ..., and nt) of the acquisition period. For example, the acquisition period in operation S100 may be selected as 1 second (sec), and in this case, when a unit period is 1 second and a starting point is '0', sensor intensity may be obtained at a time point of 1 sec, 2 sec, ..., and n sec, or for an entire period. In another embodiment, when the acquisition period is selected as 300 milliseconds (ms), in this case, a unit period may be 300 ms, and sensor intensity may be obtained at a time point of 300 ms, 600 ms, ..., and (300*n) ms. Although the acquisition period is 1 second or 300 ms in the above, the acquisition period may be a unit smaller than 1 second or larger than 1 second according to an embodiment. The acquisition period is not limited thereto, and may be determined in various ways as long as real-time positioning may be performed.

The sensor intensity may include a signal strength received by the mobile terminal 200 from the positioning sensor 300, and a unique identification number of the positioning sensor 300. The signal strength may be an RSSI value described above. The unique identification number may include ID information of the positioning sensor 300 and a coordinate value corresponding to the ID information.

For example, a signal strength difference between different positioning sensors 300 may be proportional to a ratio of distances between the mobile terminal 200 and the positioning sensors 300. A signal strength difference may be obtained based on the signal strength and the unique identification number obtained in operation S100. In detail, operation S100 will be described with reference to the following equations.

$$A = -20 \log[r_a] + RSSI_0 \qquad\qquad B = -20 \log[r_b] + RSSI_0$$

In Equation 1 and Equation 2 , A and B respectively denote signal strengths of two positioning sensors B1 and B2 (see FIG. 1), and $r_a$ and $r_b$ respectively denote distances between the mobile terminal 200 and the two positioning sensors B1 and B2.

In this case, because a ratio $r_b/r_a$ of the distances between the mobile terminal 200 and the two positioning sensors B1 and B2 is proportional to a signal strength difference |A-B|, the distance ratio $r_b/r_a$ may be calculated based on the signal strength of each of the positioning sensors 300. According to an embodiment, the distance ratio $r_b/r_a$ may be calculated by using not only the signal strength of the positioning sensor 300 but also the unique identification number.

A specific example of the sensor intensity will be described in more detail with reference to FIG. 5.

In operation S200, a variable sets corresponding to a positioning sensor selected from among the plurality of positioning sensors 300 may be obtained for each unit period of the selected period. Operation 200 in which the variable sets is obtained may include operations S210 to S240 (not shown) described below.

First, a 'positioning sensor group' included in a sensor intensity receivable range is selected from among the plurality of positioning sensors 300 for each unit period, and the group includes at least two positioning sensors 300 (S210). Next, an available positioning sensor pair may be selected for the positioning sensor group selected for each unit period (S220). Operations S210 and S220 will be described in more detail with reference to Table 1.

| time | minor | rssi |
|---|---|---|
| 15:26:4 | 153 | -68 |
| 15:26:4 | 151 | -54 |
| 15:26:4 | 155 | -71 |
| 15:26:5 | 153 | -66 |
| 15:26:5 | 151 | -55 |
| 15:26:5 | 155 | -71 |
| 15:26:5 | 153 | -67 |
| 15:26:5 | 151 | -55 |
| 15:26:5 | 155 | -72 |
| 15:26:6 | 147 | -87 |
| 15:26:6 | 153 | -63 |
| 15:26:6 | 151 | -49 |

(continued)

| time | minor | rssi |
|---|---|---|
| **15:26:6** | 153 | -62 |
| **15:26:6** | 151 | -50 |
| **15:26:6** | 155 | -69 |
| **15:26:6** | 147 | -88 |
| **15:26:6** | 153 | -63 |
| **15:26:6** | 152 | -73 |
| **15:26:6** | 151 | -55 |
| **15:26:6** | 155 | -70 |

Referring to Table 1, sensor intensity (e.g., a unique identification number (minor) of a positioning sensor and a signal strength (rssi)) obtained for each unit of the selected period is illustrated. Table 1 shows an example where an acquisition period is selected as 1 second, and sensor intensity is obtained at each unit period time point of '15:26:4 (t1), 15:26:5 (t2), and 15:26:6 (t3)'. For example, at t1, three positioning sensors 300 (hereinafter, a positioning sensor having a three-digit identification number abc may be referred to as an 'abc sensor') having unique identification numbers of 151, 153, and 155 were selected as a positioning sensor group. The right shows a signal strength (rssi) received by the mobile terminal 200 from each positioning sensor 300 at the time point t1. At 2 that is a next unit period, the 151, 153, and 155 sensors were selected as a positioning sensor group. Next, at t3, the positioning sensors 300 having identification numbers of 147 and 152 were additionally selected in addition to the 151, 153, and 155 sensors as a positioning sensor group. In this case, at the time point t3, a sensor intensity receivable radius may change due to a change in a moving section of the mobile terminal 200 (e.g., a change in a moving section through a curve point or an intersection) or an increase in a moving speed, and thus, sensors included in the range in which sensor intensity may be obtained may increase.

Sensor intensity may refer to information obtained for each unit period by a corresponding positioning sensor as described above, or may refer to information accumulated and received at continuous time points distributed between different unit period time points. For example, when an acquisition period is selected as 1 sec as shown in Table 1 (t1 is described as 1 sec and t2 is described as 2 sec),sensor intensity of the present disclosure may refer to information obtained at each time point of 1.000 sec and 2.000 sec, or, according to an embodiment, may refer to a concept including all information values by positioning sensors accumulated and received for 0.000 sec to 0.999 sec (i.e., greater than 0 sec and less than 1 sec) and 1.000 sec to 1.999 sec (i.e., greater than 1 sec and less than 2). Hereinafter, when accumulated and received, it means that, when abc sensor intensity is received multiple times during one acquisition period (e.g., 0.000 sec to 0.999 sec), not only latest or average values are received, but all values received multiple times during the acquisition period are received.

In an embodiment, sensor intensity may be raw data obtained for each unit period. In another embodiment, the sensor intensity may include the raw data and/or processed data obtained by processing the raw data. In detail, a signal strength (rssi) of one sensor (e.g., an abc sensor) may be obtained, and at least one processed data of an average value, an intermediate value, a minimum maximum mean, a minimum value, and a maximum value for the signal strength. Next, the abc sensor and the sensor intensity (rssi) (raw data or one processed data) of the abc sensor may be matched to each other in one to one manner ('the abc sensor-an rssi value of the abc sensor). That is, because one sensor and each of a plurality of signal strength values may be matched to each other, a plurality of signal strength values per sensor may be obtained at one unit period time point.

Accordingly, referring to Table 1, the reason why at t2, more sensor intensity than at t1 is obtained even though the positioning sensors having the same identification numbers (151, 153, and 155) as at t1 are selected may be that more sensor intensity is received at t2 than at t1 or a plurality of processed data are more matched to each corresponding sensor. The reason why more sensor intensity is obtained than the number of positioning sensors selected at t3 of Table 1 may be that a plurality of processed data are obtained for each sensor.

Next, an available positioning sensor pair is selected for the positioning sensor group selected for each unit period. When it is assumed that n positioning sensors 300 are provided in an indoor space for indoor positioning of the present disclosure and i positioning sensors 300 (i is a natural number satisfying $2 \leq i \leq n$) are selected as a positioning sensor group, positioning sensor pairs as many as combinations $iCz$ may be obtained For example, referring to Table 1, because three sensors are selected as a positioning sensor group at t1, $_3C_2$ positioning sensor pairs may be obtained.

Next, combination data of the positioning sensor pairs may be obtained for each unit period (S230). The combination data that is a parameter may be intermediate data for deriving a final location of the mobile terminal 200 to be obtained in operation S400 from the sensor intensity obtained in operation S100. In this case, the combination data may include at least one of the distance ratio $r = r_b/r_a$, a first vector (position vector) Vp, and a second vector (direction vector) Vd. The first vector Vp refers to a position vector including an absolute coordinate value of each of two positioning sensors of a positioning sensor pair. The second vector Vd refers to a direction vector including a relative coordinate value of another positioning sensor with respect to one positioning sensor from among the two positioning sensors of the positioning sensor pair. The first vector Vp and the second vector Vd will be described in more detail with reference to FIG. 5.

Next, a variable sets may be obtained based on the combination data (S240). In detail, the variable sets may include information about an Apollonius' sphere (AS) calculated based on the combination data. That is, the combination data for each unit period may constitute the AS, and the variable sets of the present disclosure may include the AS and a plurality of intercepts of the AS, which will be described in more detail with reference to FIGS. 6 to 8.

Next, in operation S300, a probability inference method is applied to the variable sets. In this case, the probability inference method may be, for example, a Bayesian estimation method, and operation S300 may be an operation in which the Bayesian inference method is applied to the variable sets. Operation S300 may be performed by operations described below.

For example, at least two sample data may be selected from among a plurality of variable set obtained for each unit period. Next, a final probability distribution in which all sample data selected as a hyperparameter are reflected may be calculated. In this case, the final probability distribution regarding a location of a moving object may have a normal distribution defined by a representative value, and a standard deviation value distributed around a median value. In this case, at least two sample data may be selected, and the final probability distribution may be calculated by multiplying each selected sample data by a filter function corresponding to each sample data. Examples of the filter function may include, but are not limited to, a Kalman filter (KF), extended KF (EKF), particle filter (PF), and graph-based approach method, which will be described in more detail with reference to FIG. 9. Although a Bayesian inference method is used as the probability inference method in operation S300, other probability inference methods may be used.

In operation S400, a final location of the mobile terminal 200 may be obtained based on the probability inference method used in operation S300. In operation S400 in which the final location of the mobile terminal is calculated, a circular distribution including a representative value (a median value or an average value) of the probability distribution calculated in operation S300, and a standard deviation value distributed around the representative value may be calculated. A probability distribution representing the final location of the mobile terminal 200 will be described in more detail with reference to FIGS. 10 and 11.

A specific embodiment of an indoor positioning method according to an embodiment of the present disclosure will be described with reference to FIGS. 5 to 11.

FIG. 5 is a diagram for describing an example of a method of obtaining combination data, according to an embodiment of the present disclosure.

Referring to FIG. 5, a positioning sensor group selected at one unit period (ta) point in an indoor space is illustrated. A corresponding unique identification number is illustrated for each location where the positioning sensor 300 is installed, and an ID of three digits as a unique identification number (from 101 to 110, or when h is a natural number greater than 10, a number of 110 or more) and a corresponding coordinate value (x, y) are illustrated. In an embodiment of the present drawing, a total of 10 positioning sensors 300 are selected as a positioning sensor group. For example, a sensor 102 has an ID 102 and a unique identification number including a coordinate value of (0, 16). Coordinates for calculating the first vector Vp located on the left of the drawing correspond to an absolute coordinate system based on coordinates of the origin (0, 0). In this case, a sensor 101 is located at the origin (0, 0).

Coordinates for calculating the second vector Vd (d=(a,b)) illustrated at the right of the drawing correspond to a relative coordinate system having coordinates in which an abc sensor located at a location of vector j= (l, 0) becomes a new origin. The abc sensor located at a location of vector i= (l-25, 16) is expressed as one direction vector (second vector) Vd around the new origin j. Although only one first vector Vp and only one second vector Vd are illustrated in the drawing, as many vectors Vp and Vd as the number of $_kC_2$ may be obtained. First, a general equation for intercepts of a sphere for obtaining an AS may be easily derived by using a plurality of ($_kC_2$) second vectors Vd in a relative coordinate system. For example, a general equation of intercepts as shown in Equation 4 may be derived from a relationship of Equation 3.

[Equation 3]

$$\sqrt{x^2 + y^2 + z^2} : \sqrt{(x-a)^2 + (y-b)^2 + z^2} = m : n$$

[Equation 4]

$$(x - a \cdot l)^2 + (y - b \cdot l)^2 + z^2 = (a^2 + b^2) \cdot (l^2 - 1) \quad (l = \frac{m^2}{k}, k = m^2 - n^2)$$

Next, an intercept value of an absolute coordinate system may be obtained by adding the position vector Vp of the new origin j of the relative coordinate system to an intercept value calculated in the relative coordinate system.

Combination data will be described in more detail with reference to FIG. 6. FIG. 6 is a schematic diagram for describing an example of a method of calculating a variable sets obtained according to an indoor positioning method, according to an embodiment of the present disclosure.

Referring to FIG. 6, an AS and one intercept obtained by Equations 3 and 4 are illustrated. The AS is an example of a 'variable sets' of the present disclosure. FIG. 6 illustrates an example where one positioning sensor pair ($B_1$ and $B_2$) is selected at one unit period (ta) point, and in this case, the second vector (direction vector) Vd that is an example of combination data may be obtained as a vector (a, b) pointing from $B_1$ to $B_2$. Due to the derivation of the direction vector, each of $B_1$ and $B_2$ expressed in a relative coordinate system with $B_1$ as an origin respectively have coordinate values of (0, 0) and (a, b). In FIG. 6, the AS is formed as a set of points having a distance ratio r of m:n from the two positioning sensors $B_1$ and $B_2$. In other words, the AS obtained by according to an embodiment of the present disclosure may be defined by the distance ratio r=n/m (r≠1) and the direction vector (a, b), that is, three factors r, a, and b.

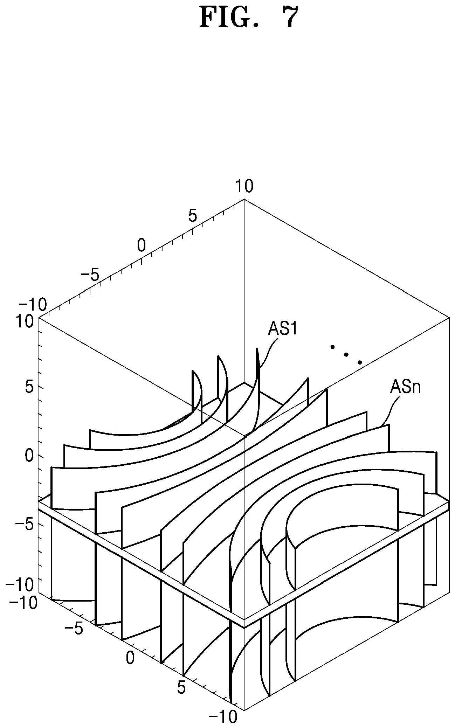

h is an installation height of the ceiling of two positioning sensors $B_1$ of $B_2$. In FIG. 6, a single AS corresponding to one unit period ta or one positioning sensor pair ($B_1$ and $B_2$) is illustrated, and a process obtaining a plurality of ASs will be described with reference to FIGS. 7 and 8.

FIG. 7 is a diagram illustrating an example of a variable sets obtained according to an indoor positioning method, according to an embodiment of the present disclosure. FIG. 7 illustrates a plurality of ASs as one variable sets. Referring to FIG. 7, a plurality of ASs AS1, ..., and ASn including ASs obtained for a plurality of unit periods, ASs obtained for a plurality of sensor pairs even in one unit period, are illustrated. Final location coordinates of the mobile terminal 200 may be estimated by applying a probability inference method described below to the plurality of ASs AS1, ..., and ASn.

FIG. 8 is a diagram illustrating another example of a variable sets obtained according to an indoor positioning method, according to an embodiment of the present disclosure. FIG. 8 illustrates a plurality of intercepts of a plurality of ASs as another variable sets. Referring to FIG. 8, intercepts 91 and 92 of ASs obtained for a plurality of unit periods, ASs obtained for a plurality of positioning sensor pairs even in one unit period, are illustrated. For example, the intercepts 91 and 92 may be respectively an x-intercept and a y-intercept that are intersection points with different axes such as an x-axis and a y-axis. Each of the intercepts 91 and 92 has a specific coordinate value in one coordinate system, and thus, a distribution thereof may be shown as in FIG. 7.

As such, because combination data (distance ratio r and the second vector Vd including a and b) is used to generate a variable sets for identifying a final location based on sensor intensity of two selected positioning sensors 300, easy intercept calculation may be performed, and an absolute location of an intercept may be calculated by obtaining a vector sum by adding the first vector Vp that is a position vector of the positioning sensors to a calculation result value. Accordingly, even when there are a very large number of positioning sensors 300, accurate and rapid indoor positioning may be performed.

Operation S300 in which a probability inference method is applied according to an embodiment of the present disclosure will be described with reference to FIG. 9.

FIG. 9 is a diagram for describing a probability inference method applied to an indoor positioning method, according to an embodiment of the present disclosure. FIG. 9 illustrates a final location distribution Sf of the mobile terminal 200 calculated by applying a Bayesian estimation method based on a prior probability distribution $S_1$, sample intercepts P selected as sample data, and a sample probability distribution $S_2$ of the sample intercepts. In the present disclosure, a conditional probability distribution Sf of a final location of the mobile terminal 200 is obtained as a parameter to be estimated based on given data (e.g., variable sets based on sensor intensity).

$S_1$ may be a location of the mobile terminal 200 previously obtained as a prior distribution of the parameter. When there is no information about a current distribution of the parameter, $S_1$ may be a non-information distribution such as a uniform distribution or a normal distribution with the center of 0. A non-information distribution having a pre-measured or predicted location as an average may be formed every unit period. $S_1$ has an average value $m_1$ as a representative value and a probability distribution such as $S_1$ distributed around $m_1$. Although an average value of Sz described below is not illustrated, $S_2$ also has an average value and a probability distribution such as $S_2$ distributed around the average value.

$S_2$ may be a distribution of sample intercepts P selected from among intercepts P of a plurality of ASs calculated from sensor intensity such as a signal strength (RSSI) newly obtained by the indoor positioning server 100.

For example, the sample probability distribution $S_2$ may correspond to a distribution of two intercepts P derived from among the plurality of ASs obtained as a variable sets for one unit period ta. In another example, the sample probability distribution $S_2$ may correspond to a probability distribution for signal strengths from the two positioning sensors 300.

In this case, precise and accurate final location estimation of the mobile terminal 200 may be performed by applying Bayesian inference to samples of intercepts P of all newly obtained or added ASs. Sf that is a posterior distribution of the parameter $\mu$ refers to a conditional probability distribution for the parameter $\mu$ in a state where the above sample data ($x_1$, ..., and $x_N$) (e.g., $S_2$, in the present disclosure) is given. This may be mathematically expressed as Equation 5. Sf is output data to be finally obtained in the present disclosure.

[Equation 5]

$$S_f = p(\mu|x_1, \ldots, x_N)$$

Although one sample probability distribution $S_2$ is illustrated in FIG. 9, a plurality of sample data may be selected. In this case, whenever sample data is added, a circular function of Bayesian inference (e.g., Equation 5) may be corrected to derive the conditional probability distribution $S_f$ of the final location.

Referring back to FIG. 9, the final location distribution $S_f$ has $m_f$ as an average value and a probability distribution such as $S_f$ distributed around $m_f$. As such, according to an indoor positioning method according to an embodiment of the present disclosure, because a result value of a location of a moving object is output as a probability distribution, the result value may be easily processed according to a user's needs and easily combined with other sensor intensity. In detail, because a location of a moving object of the present disclosure is output as a circular distribution or a normal distribution defined by coordinate values of a median value and a standard deviation, the location may be easily combined with information obtained by a sensor (e.g., an image sensor or a GPS sensor) other than the positioning sensor 300 of the present disclosure. In contrast, when a final location value is calculated as a specific point rather than a probability distribution, precision may seem improved, but an error may increase and combination with other sensor intensity may not be easy. Accordingly, the accuracy of location estimation may be improved by combining a final location distribution calculated as a probability distribution of the present disclosure with a location distribution of a probability distribution of another sensor.

An actual implementation of an indoor positioning method according to an embodiment of the present disclosure will be described with reference to FIGS. 10 and 11. FIG. 10 is a schematic view for describing a method of calculating a final location of a mobile terminal at one time point according to an indoor positioning method, according to an embodiment of the present disclosure. FIG. 11 is a schematic view for describing a method of calculating a final location of a mobile terminal at another time point, according to an embodiment of the present disclosure. The same description as that made above will be briefly made or omitted.

FIGS. 10 and 11 illustrate final locations Pf of the mobile terminal 200 respectively estimated at 10:28:30 and 10:28:43 by the indoor positioning server 100 when a period is sec.

First, referring to FIG. 10, 70a is an output screen provided through a display provided in the indoor positioning server 100 or the mobile terminal 200, and 70b shows one unit period (10:28:30) time point (hereinafter, simply referred to as 'tp time point') while a vehicle including a mobile terminal 201 with the output screen 70a moves in an indoor space. In this case, referring to 70a, a plurality of positioning sensors 300 are installed in an indoor space L such as a parking space, and a unique identification number is assigned to each positioning sensor location. A location of each positioning sensor 300 may be output as a sensor UI (BS) on the output screen 70a. Intercepts 71 and 72 of Apollonius' spheres may be output as a plurality of variable set obtained at the tp time point in the indoor space L on 70a. In this case, when the output screen 70a is viewed as one coordinate system, the intercepts 71 and 72 may be distributed in an absolute coordinate system as shown in FIG. 10.

A final location distribution Pf1 may be obtained according to an indoor positioning method of the present disclosure based on the plurality of variable set 71 and 72. In this case, the final location distribution Pf1 may be calculated as a circular distribution having a representative value (average value or median value) of the probability distribution Sf calculated based on the variable set 71 and 72 as the center and a standard deviation value of the probability distribution Sf as a radius.

Next, referring to FIG. 11, 80a is an output screen provided through the display provided in the indoor positioning server 100 or the mobile terminal 200, and 80b shows one unit period (10:28:43) time point (hereinafter, simply referred to as 'tq time point') while the vehicle including the mobile terminal 201 with the output screen 80a moves in the indoor space. In this case, referring to 80a, the plurality of positioning sensors 300 are installed. Intercepts 81 and 82 of Apollonius' spheres may be output as a plurality of variable set obtained at the tq time point in the indoor space L on 80a. In this case, when the output screen 80a is viewed as one coordinate system, the intercepts 81 and 82 may be distributed in an absolute coordinate system as shown in FIG. 11.

A final location distribution Pf2 may be obtained according to an indoor positioning method of the present disclosure based on the plurality of variable set 81 and 82. In this case, the final location distribution Pf2 may be calculated as a circular distribution having a representative value (average value or median value) of the probability distribution Sf calculated based on the variable set 81 and 82 as the center and a standard deviation value of the probability distribution Sf as a radius.

When FIGS. 10 and 11 are compared with each other, it is found that a location of the mobile terminal 200 finally changes while 13 sec have passed. A positioning sensor group (or pair) selected at each time point (tp or tq) may change, and thus, the number of variable set and a distribution obtained may also change. As such, a positioning sensor pair utilized in indoor positioning may be flexibly selected according to the movement of the mobile terminal 200 that changes in real time, and thus, precise and rapid positioning may be performed even in a space (in particular, in an indoor space) in which GPS reception is difficult.

A device and/or system described herein may be implemented using hardware components, software components, or a combination thereof. A device and an element described in embodiments may be implemented using one or more general-purpose or special purpose computers, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions. A processing device may execute an operating system (OS) and one or more software applications that run on the OS. Also, the processing device may access, store, manipulate, process, and create data in response to execution of software. For easy understanding, one processing device is used, but it will be understood by one of ordinary skill in the art that a processing device may include multiple processing elements and/or multiple types of processing elements. For example, the processing device may include multiple processors or a processor and a controller. In addition, other processing configurations, such as parallel processors, are possible.

Software may include a computer program, a piece of code, an instruction, or a combination thereof, to independently or collectively instruct or configure a processing device to operate as desired. Software and/or data may be embodied permanently or temporarily in any type of machine, component, physical or virtual equipment, computer storage medium or device, or a transmitted signal wave, to provide instructions or data to or to be interpreted by a processing device. Software may also be distributed over network coupled computer systems so that the software is stored and executed in a distributed fashion. Software and data may be stored in one or more computer-readable recording media.

A method according to an embodiment may be embodied as program commands executable by various computer means and may be recorded on a computer-readable recording medium. The computer-readable recording medium may include program commands, data files, data structures, and the like separately or in combinations. The program commands recorded on the computer-readable recording medium may be specially designed and configured for embodiments or may be well-known to and be usable by one of ordinary skill in the art of computer software. Examples of the computer-readable recording medium include a magnetic medium such as a hard disk, a floppy disk, or a magnetic tape, an optical medium such as a CD-ROM or a DVD, a magneto-optical medium such as a floptical disk, and a hardware device specially configured to store and execute program commands such as a ROM, a RAM, or a flash memory. Examples of the program commands include advanced language code that may be executed by a computer by using an interpreter or the like as well as machine language code made by a compiler. The described hardware device may be configured to operate as one or more software modules in order to perform an operation of an embodiment, and the reverse is the same.

In addition, although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims, and these modifications should not be individually understood from the technical spirit or the prospect of the present disclosure.

Accordingly, the spirit of the present disclosure is not limited to the above-described embodiments, and all ranges equivalent to the claims or equivalently changed therefrom as well as the claims described below belong to the scope of the spirit of the present disclosure.

**Claims**

1. An indoor positioning method of measuring a location of a mobile terminal by using the mobile terminal and a plurality of positioning sensors communicating with the mobile terminal, the indoor positioning method comprising:

   selecting a period for obtaining sensor intensity about the interaction between the mobile terminal and the plurality of positioning sensors;

obtaining a variable sets corresponding to a positioning sensor selected from among the plurality of positioning sensors about which the sensor intensity is obtained, for each unit period of the selected period;
applying a probability inference method to the variable sets; and
obtaining a final location of the mobile terminal based on the probability inference method,
wherein the sensor intensity comprises a signal strength received by the mobile terminal from the positioning sensor and a unique identification number of the positioning sensor.

2. The indoor positioning method of claim 1, wherein the obtaining of the variable sets comprises:

selecting a positioning sensor group included in a sensor intensity receivable range from among the plurality of positioning sensors for each unit period, wherein the positioning sensor group comprises at least two positioning sensors;
selecting an available positioning sensor pair for the selected positioning sensor group for each unit period;
obtaining combination data of the positioning sensor pair for each unit period; and
obtaining the variable sets based on the combination data.

3. The indoor positioning method of claim 2, wherein the combination data comprises at least one of:

a distance ratio between each of the two positioning sensors forming a pair of the mobile terminal and the positioning sensor;
a first vector comprising an absolute coordinate value of each of the two positioning sensors of the positioning sensor pair; and
a second vector comprising a relative coordinate value of another positioning sensor with respect to one positioning sensor from among the two positioning sensors of the positioning sensor pair.

4. The indoor positioning method of claim 3, wherein the variable sets comprises information about an Apollonius' sphere calculated based on a signal strength and a unique identification number of a corresponding positioning sensor pair, wherein the information comprises:

the Apollonius' sphere comprising combination data for each unit period; and
a plurality of x- and y-intercepts of the Apollonius' sphere for each unit period.

5. The indoor positioning method of claim 2, wherein, when k positioning sensors are selected as the positioning sensor group (k is a natural number satisfying $2 \leq k \leq n$), the positioning sensor pairs as many as combinations $_kC_2$ are obtained.

6. The indoor positioning method of claim 3, wherein the applying of the statistical inference that is applying a Bayesian estimation to the combination data comprises:

selecting at least two sample data from among a plurality of variable set; and
calculating a the resultant normal distribution of a location of the mobile terminal by multiplying each of the selected sample data by a corresponding filter function.

7. The indoor positioning method of claim 6, wherein the calculating of the final location of the mobile terminal comprises calculating a circular distribution comprising a representative value selected from among a median value or an average value of the resultant normal distribution, and a standard deviation value distributed around the median value.

8. A computer program stored in a recording medium to execute the indoor positioning method of any one of claims 1 to 7 by using a computer.

9. An indoor positioning system comprising an indoor positioning server communicating with a mobile terminal and a plurality of positioning sensors,

wherein the indoor positioning sensor is configured to
select a period for obtaining sensor intensity about a relationship between the mobile terminal and the plurality of positioning sensors,
obtain a variable sets corresponding to a positioning sensor selected from among the plurality of positioning sensors about which the sensor intensity is obtained, for each unit period of the selected period,
apply a probability inference method to the variable sets, and

obtain a final location of the mobile terminal based on the probability inference method,
wherein the sensor intensity comprises a signal strength received by the mobile terminal from the positioning sensor and a unique identification number of the positioning sensor.

10. The indoor positioning system of claim 9, wherein the indoor positioning server is further configured to, in the obtaining of the variable sets,

select a positioning sensor group included in a sensor intensity receivable range from among the plurality of positioning sensors for each unit period, wherein the positioning sensor group comprises at least two positioning sensors,
select an available positioning sensor pair for the selected positioning sensor group for each unit period,
obtain combination data of the positioning sensor pair for each unit period, and
obtain the variable sets based on the combination data.

11. The indoor positioning system of claim 10, wherein the combination data comprises at least one of:

a distance ratio between the mobile terminal and each of two positioning sensors of the positioning sensor pair;
a first vector comprising an absolute coordinate value of each of the two positioning sensors of the positioning sensor pair; and
a second vector comprising a relative coordinate value of one positioning sensor with respect to the other positioning sensor from among the two positioning sensors of the positioning sensor pair.

12. The indoor positioning system of claim 11, wherein the variable sets comprises information about an Apollonius' sphere calculated based on a signal strength and a unique identification number of a corresponding positioning sensor pair, wherein the information comprises:

the Apollonius' sphere comprising combination data for unit period; and
a plurality of intercepts of the Apollonius' sphere for each unit period.

13. The indoor positioning system of claim 10, wherein, when k positioning sensors are selected as the positioning sensor group (k is a natural number satisfying $2 \leq k \leq n$), the positioning sensor pairs as many as combinations $_kC_2$ are obtained.

14. The indoor positioning system of claim 11, wherein the indoor positioning server is further configured to, in the applying of the probability inference method that is applying a Bayesian inference method to the combination data,

select at least two sample data from among a plurality of variable set, and
calculate a probability distribution of a location of the mobile terminal having a normal distribution by multiplying each selected sample data by a corresponding filter function.

15. The indoor positioning system of claim 14, wherein the indoor positioning server is further configured to, in the calculating of the final location of the mobile terminal,
calculate a circular distribution comprising a representative value selected from among a median value or an average value of the probability distribution, and a standard deviation value distributed around the median or the average value.

# FIG. 1

# FIG. 2

```
                                    ╱300
        ┌──────────────────────────────────┐
        │                           ╱310    │
        │   ┌──────────────────────────┐    │
        │   │         MEMORY           │    │
        │   └──────────────────────────┘    │
        │                           ╱320    │
        │   ┌──────────────────────────┐    │
        │   │        PROCESSOR         │    │
        │   └──────────────────────────┘    │
        │                           ╱330    │
        │   ┌──────────────────────────┐    │
        │   │   COMMUNICATION MODULE   │    │
        │   └──────────────────────────┘    │
        └──────────────────────────────────┘
```

# FIG. 3

320

321

PERIOD
SELECTING UNIT

322

VARIABLE GROUP
OBTAINING UNIT

323

PROBABILITY INFERENCE
APPLYING UNIT

324

LOCATION
OBTAINING UNIT

# FIG. 4

START

SELECT PERIOD FOR OBTAINING
SENSOR INFORMATION — S100

OBTAIN VARIABLE GROUP CORRESPONDING
TO SELECTED SIGNAL GENERATION DEVICE,
FOR EACH SELECTED PERIOD — S200

APPLY PROBABILITY INFERENCE
METHOD TO VARIABLE GROUP — S300

OBTAIN FINAL LOCATION OF MOBILE TERMINAL
BASED ON PROBABILITY INFERENCE METHOD — S400

END

EP 4 446 766 A1

# FIG. 5

# FIG. 6

# FIG. 7

FIG. 8

# FIG. 9

# FIG. 10

EP 4 446 766 A1

FIG. 11

## INTERNATIONAL SEARCH REPORT

| | International application No. |
|---|---|
| | **PCT/KR2022/012359** |

**A.    CLASSIFICATION OF SUBJECT MATTER**

**G01S 5/02**(2010.01)i; **G01C 21/20**(2006.01)i; **G06N 7/00**(2006.01)i; **G06N 5/04**(2006.01)i

According to International Patent Classification (IPC) or to both national classification and IPC

**B.    FIELDS SEARCHED**

Minimum documentation searched (classification system followed by classification symbols)

G01S 5/02(2010.01); G01S 1/02(2010.01); G08B 21/10(2006.01); H04W 4/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실내 측위(indoor positioning), 주기(period), 위치(location), 확률추론(probabilit y inference)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2014-0028368 A (SENSORWAY CO., LTD.) 10 March 2014 (2014-03-10)<br>        See paragraphs [0026]-[0061] and figures 1-5. | 1-15 |
| A | KR 10-1785852 B1 (INHA UNIVERSITY RESEARCH AND BUSINESS FOUNDATION) 17 October 2017 (2017-10-17)<br>        See paragraphs [0022]-[0072], claim 1 and figures 1-7. | 1-15 |
| A | KR 10-2018-0077861 A (GIO1004 ROBOT TECHNOLOGY) 09 July 2018 (2018-07-09)<br>        See claims 1-2 and figures 1-5. | 1-15 |
| A | KR 10-2008-0053116 A (ELECTRONICS AND TELECOMMUNICATIONS RESEARCH INSTITUTE) 12 June 2008 (2008-06-12)<br>        See claims 7-9 and figures 1-10. | 1-15 |
| A | KR 10-2019-0064345 A (DONGGUK UNIVERSITY INDUSTRY-ACADEMIC COOPERATION FOUNDATION) 10 June 2019 (2019-06-10)<br>        See claims 1-2 and figures 1-6. | 1-15 |

☐ Further documents are listed in the continuation of Box C.       ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 March 2023** | **10 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012359**

| Patent document cited in search report | | | Publication date (day/month/year) | Patent family member(s) | | | Publication date (day/month/year) |
|---|---|---|---|---|---|---|---|
| KR | 10-2014-0028368 | A | 10 March 2014 | None | | | |
| KR | 10-1785852 | B1 | 17 October 2017 | None | | | |
| KR | 10-2018-0077861 | A | 09 July 2018 | KR | 10-1911503 | B1 | 24 October 2018 |
| KR | 10-2008-0053116 | A | 12 June 2008 | KR | 10-0848322 | B1 | 24 July 2008 |
| | | | | US | 2010-0039929 | A1 | 18 February 2010 |
| | | | | WO | 2008-069446 | A1 | 12 June 2008 |
| KR | 10-2019-0064345 | A | 10 June 2019 | KR | 10-2076093 | B1 | 12 February 2020 |
| | | | | WO | 2019-107731 | A1 | 06 June 2019 |

Form PCT/ISA/210 (patent family annex) (July 2022)